# EUROPEAN PATENT APPLICATION

(11) **EP 3 714 998 A1**
(43) Date of publication of application: **30.09.2020**
(21) Application number: 20000132.9
(22) Date of filing: 25.03.2020
(51) Int. Cl.: B08B 15/00, B08B 15/02, B01D 29/50, B09B 3/00

(54) **SUCTION DEVICE FOR A DECONTAMINATION SYSTEM**

(30) Priority: 25.03.2019 NL 1043205
(71) Applicant: Demto B.V., 4251 NZ Werkendam (NL)
(72) Inventor: Schermers, Nanning Cornelus, 4255 VN Nieuwendijk (NL)
(74) Representative: Griebling, Onno

(57) **Abstract**

A decontamination system is described, and a suction cabinet (200) therefor, comprising:
- a first entrance opening (212);
- a pump space (210) communicating with the first entrance opening (212) and having arranged therein a first motor driven air pump (211);
- a distribution space (230);
- a first filter (241) arranged between the pump space (210) and the distribution space (230), of which an entrance communicates with the pump space (210) and of which an exit communicates with the distribution space (230);
- a second entrance opening (222), communicating directly with the distribution space (230);
- a cabinet exit (260);
- a second motor driven air pump (270) arranged at the cabinet exit (260);
- a second filter (242) arranged between the distribution space (230) and the exit (260), of which an entrance communicates with the distribution space (230) and of which an exit communicates with the cabinet exit (260).

## Description

### FIELD OF THE INVENTION

The invention generally relates to labour that has to be done in a protected environment. By way of example, but not exclusively, the invention relates to decontamination work in residential houses or other buildings, where asbestos is to be removed.

### BACKGROUND OF THE INVENTION

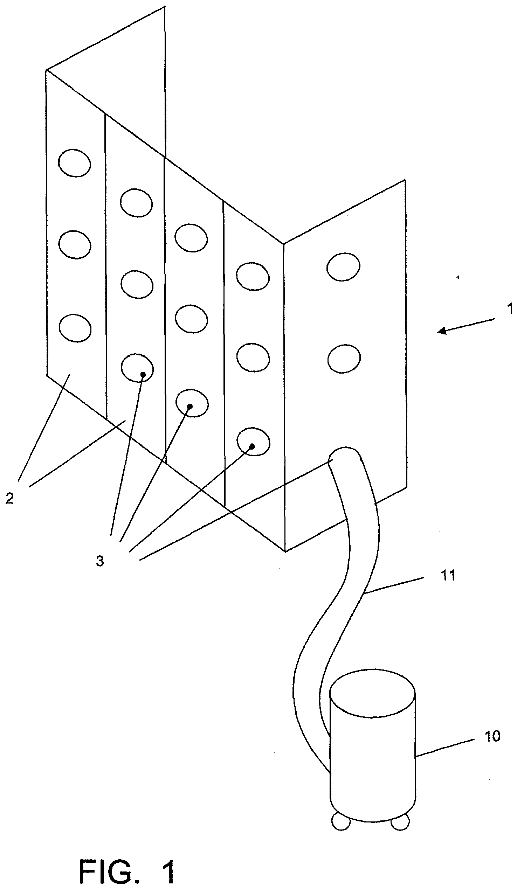

As known, removing asbestos is a dangerous job, in which asbestos particles can be releases which form a health risk when inhaled. However, it not always possible to completely vacate a building while the work is being done. For this type of situations, it is known to create a sealed working space with the use of screening elements, which working space is sealed off from the remainder of the room. Figure 1 is a schematic perspective view, showing such shielding box. The shielding box 1, which may be assembled from multiple shielding panels in a modular way, is for instance arranged around a windowsill or a part of a wall to be decontaminated. Care is being taken that the box always joins the wall in an airtight manner. The box is provided with multiple passage holes 3, which may for instance be provided with work gloves, wherein always the collar of such work glove is attached to the edge of such passage hole 3 in a sealing manner. Also there are lids provided for completely closing such passage hole. An advantage of such approach is that the workers can reside outside the box in a clean room, and can perform the work in the working space shielded by the shielding box by extending their arms through a passage hole, while their hands will reach into a glove mentioned. In such manner, they can operate the tools present in the working space. In fact, residents or other users of the room concerned may simply stay present, outside the shielded working space, which is a big advantage for the residents; it is true that they experience the usual nuisance of work in progress, but they are protected against possibly released harmful dust particles, particularly asbestos.

A system separating a potentially contaminated working space from the remainder of a room in a building in such manner, so that it is possible to work in a safe manner within the shielded space without there being any danger in the remainder of the room of being exposed to the potentially harmful dust particles, is indicated by the phrase "containment" system and the shielding wall used for that purpose is indicated by the phrase "containment" wall.

For a well-functioning "containment" system, two other functional components are important.

In the case of removing asbestos and comparable work, typically dust is released, which must be removed by suction. A second important component therefore is a dust suction device. Up to now, for this purpose an "ordinary" vacuum cleaner is used, which may be arranged inside the containment space, but this has a disadvantage that the entire vacuum cleaner must be considered as being polluted. As alternative, the vacuum cleaner is arranged outside the containment space, as illustrated in figure 1. The vacuum cleaner 10 has its suction entrance connected to one of the passage holes 3 by means of a hose 11. Typically, the hose extends through the passage hole, and at its end within the working space the hose is provided with a nozzle to be able to locally suck up the generated dust. Then, this dust is sucked via the hose 11 to the vacuum cleaner 10, where it is collected in a dust bag in the usual manner.

In the second place, it is important that the pressure within the working space is kept lower than the pressure outside. Thus, in the case of possibly occurring leakage, no contaminated air can escape to the outside. In order to achieve this, a so-called low pressure machine 20 is connected to one of the passage holes 3, either directly, or via a hose 21. As far as its functioning is concerned, the low pressure machine 20 is similar to a vacuum cleaner: air is sucked in from the containment space, which after filtering is blown out towards the clean space. An important difference is in the required suction capacity, which must be sufficient to compensate a certain amount of leakage.

### SUMMARY OF THE INVENTION

It is a big problem that dust bags are indeed intended to collect and hold domestic dust, and do this well up to a certain extent, but they are not suitable to hold asbestos dust with the certainty needed. Furthermore, the entire design of an ordinary vacuum cleaner is not suitable for the purpose of sucking up asbestos in a safe manner. All in all, it boils down to the fact that the ordinary vacuum cleaner which is used in the above-described manner will blow a substantial amount of dust into the "clean" room, including a part asbestos dust. Since the other users of the "clean" room believe that the room stays clean, they will not take protective measures such as mouth masks, so that in fact they are exposed to asbestos dust without protection. Furthermore, after performing the work, the so-called "clean" room should actually be considered as "contaminated room", and should be decontaminated in its entirety.

Further, the usual vacuum cleaner has a problem in the area of disposal of the removed dust. At a certain moment, the dust bag is full and must be removed. To that end, in the case of the usual vacuum cleaner the housing of the vacuum cleaner is opened to take out the dust bag. However, the dust bag is only a coarse filter, which may perhaps retain large dust particles but which allows the smaller ones to pass, so that in any case the outside of the dust bag must be considered to be "polluted". Furthermore, it will be inevitable that the bag is pinched, causing this bag to blow out an amount of air with a high concentration of asbestos particles into the clean room.

Different requirements are set to the vacuum cleaner 10 and the low pressure machine 20. For a good dust suction operation, the vacuum cleaner must be capable of locally creating a relatively large underpressure with respect to the surroundings, for instance in the order of 8000 Pa underpressure. On the other hand it is desirable to keep the pressure in the containment space as a whole somewhat lower, for instance 20 Pa, than the atmospheric pressure in the clean room. Depending on the volume of the containment space, a volume flow is required for this purpose, which usually a normal vacuum cleaner can not provide. Above that, the underpressure must also be maintained in moments when the vacuum cleaner is not operational. On the other hand, a low pressure machine is not suitable for functioning as a vacuum cleaner. Therefore, according to the present state of the art, two different machines are required. It is at least a disadvantage that these machines occupy space.

If the vacuum cleaner 10 is placed outside the containment space, a further problem exists. When the vacuum cleaner is in operation, in case of small containment volumes with a good sealing, the pressure in the containment space can become too low and the containment walls can collapse. It is also possible that air from the surroundings is sucked back into the containment space via the low pressure machine, in which case dust from the filter of the low pressure machine is brought back into the containment space.

An objective of the invention is to provide a solution to the above-described problems.

According to an important aspect, the present invention provides a suction device with a combined function of dust suction device and low pressure machine. Sucked air is blown back into the sealed "containment" space. It is true that the entire pathway of suction and blowing back takes place outside the "containment" walls, but it is completely separated form the clean room. Absolutely nothing is blown out to the outside. In fact, the dust suction device can be considered to be an extension of the "containment" space.

According to an important aspect, the present invention provides a dust suction device with a filter placed close to the "containment" wall. If the filter is full, it can be taken out of the housing of the dust suction device from the inside of the "containment" space, and in the same manner a new filter can be placed. The full filter thus remains in the "containment" space. Thus, also the step of exchanging the filter can take place in a safe manner.

### BRIEF DESCRIPTION OF THE DRAWINGS

These and other aspects, features and advantages of the present invention will be further clarified by the following description of one or more exemplary embodiments while referring to the drawings, in which same reference numerals indicate same or similar parts, in which indications "below/above", "higher/lower", "left/right" etcetera exclusively relate to the orientation shown in the figures, and in which:
Figure 1 is a schematic perspective view showing a shielding box;
Figure 2 is a schematic longitudinal cross section of a suction device according to the present invention;
Figure 3 at a larger scale shows a cross section of a connection mouth piece;

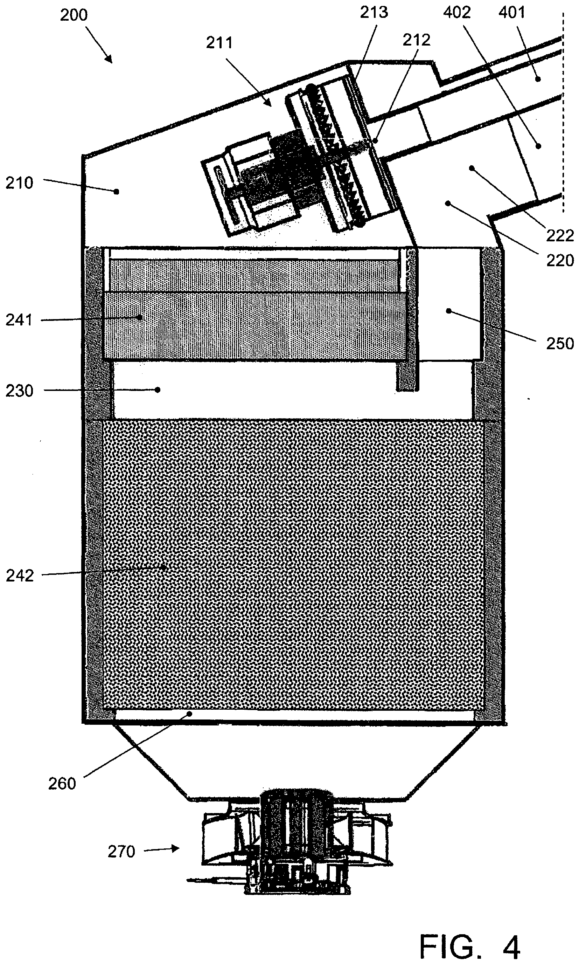

Figure 4 in a larger scale shows a cross section of a suction cabinet.

### DETAILED DESCRIPTION OF THE INVENTION

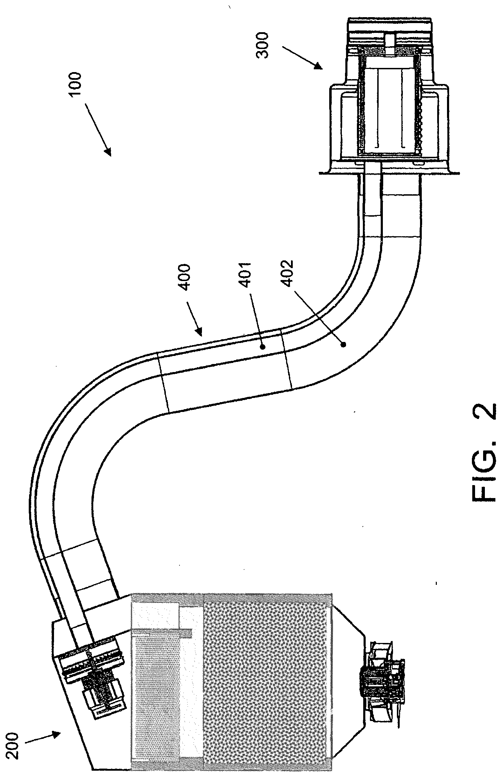

Figure 2 schematically shows the design of an embodiment of a suction device 100 according to the present invention. The suction device 100 comprises a suction cabinet 200 which is connected to a tubular connection mouth piece 300 via a flexible tube 400.

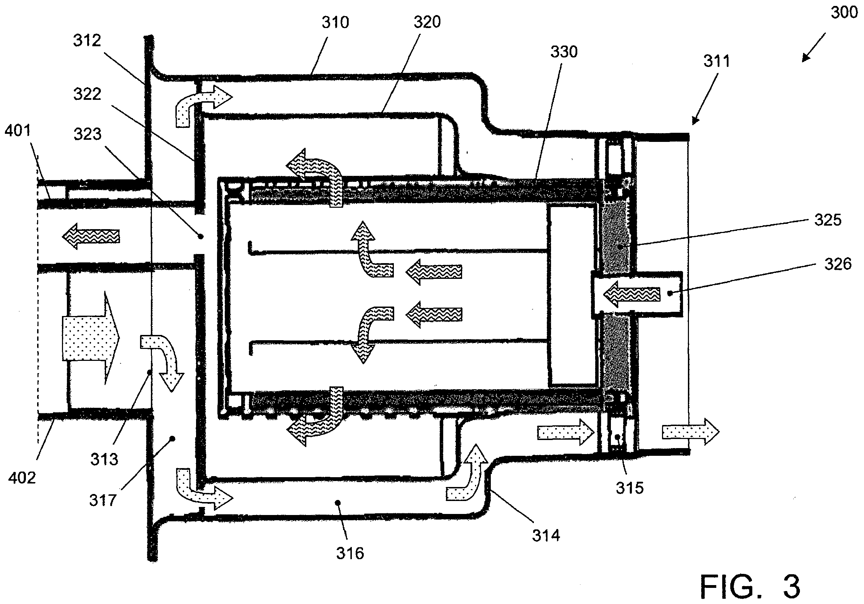

Figure 3 shows more details of the connection mouth piece 300.

The connection mouth piece 300 comprises a tubular outer mantle 310 with a free end 311 and an opposite rear wall 312. Typically, the free end 311 is circular cylindrical, and has an outer diameter fitting to the diameter of a passage hole 3. Inside the outer mantle 310, preferably coaxial therewith, a for instance circular cylindrical dust bag receiving chamber 320 is arranged, for instance in the form of a filter basket, of which the entrance can be closed by means of a lid 325 with a connection 326 for a suction hose. The connection 326 preferably lies recessed in the free end 311; the free end 311 can be closed in airtight manner by placing a lid over it, which is however not shown in this figure for sake of simplicity. The dust bag receiving chamber 320 has a rear wall 322. An exchangeable dust bag 330 (or other type of filter) is arranged in the dust bag receiving chamber 320. This dust bag 330 is in principle destined for retaining all dust particles.

The flexible tube 400 is actually a double tube with two separate air channels 401 and 402. In the example shown, a first air channel 401 is arranged within a second air channel 402. The cross sectional area of the first air channel 401 may be smaller than the cross sectional area of the part of the second air channel 402 outside the first air channel 401.

An end of the first air channel 401 extends to the rear wall 322 of the dust bag receiving chamber 320, and connects to an opening 323 in this rear wall 322. An end of the second air channel 402 extends to the rear wall 312 of the outer mantle 310, and connects to an opening 313 in this rear wall 312. This opening 313, via a first annular space 316 between the outer mantle 310 and the dust bag receiving chamber 320 and a second space 317 between the rear wall 312 of the outer mantle 310 and the rear wall 322 of the dust bag receiving chamber 320, communicates with one or more passage openings 315 adjacent, and preferably around, the entrance of the dust bag receiving chamber 320, towards the free end 311 of the connection mouth piece 300.

Via said opening 323 in its rear wall 322, the interior of the dust bag receiving chamber 320 communicates to the first air channel 401.

The outer mantle 310 may have a shoulder 314, at a distance from the free end 311.

The suction cabinet 200 has a pump space 210 with arranged therein a first motor driven air pump 211, for instance a centrifugal pump. An end of the first air channel 401 of the flexible tube 400 connects to a first entrance opening 212 in a wall 213 of the pump space 210.

The suction cabinet 200 has a distribution space 230; between the pump space 210 and the distribution space 230 a first filter 241 is located, which preferably is a HEPA filter.

The suction cabinet 200 has a connection room 220 with a second entrance opening 222, to which the second air channel 402 of the flexible tube 400 is connected. De connection room 220 is in connection with the distribution space 230 via a connection channel 250 bypassing the first filter 241.

The suction cabinet 200 has an exit 260, with connected thereto a second motor driven air pump 270. Between the distribution space 230 and the exit 260 a second filter 242 is located, which preferably is a HEPA filter.

Operation is as follows.

In a sealing manner, the connection mouth piece 300 is connected to an opening 3 of the containment space, in which case the shoulder 314 may come to lie against the containment wall.

In a first mode, the suction device 100 only operates as a low pressure machine. To this end, the second air pump 270 is actuated, while the first air pump 211 remains off. The second air pump 270 will primarily suck in air via the second filter 242, the distribution space 230, the connection channel 250, the second air channel 402 of the flexible tube 400, the spaces 317 and 316 of the connection mouth piece 300, and eventually the openings 315 of the connection mouth piece 300. Also a secondary air flow may be established via the dust bag 330 in the dust bag receiving chamber 320, the first air channel 401 of the flexible tube 400, the first filter 241, the distribution space 230, and the second filter 242. In any case, all air that reaches the second air pump 270 will at least have been filtered by the second filter 242, so that this air is clean and is allowed to be blown out towards the clean room.

In a second mode, the suction device 100 only operates as a dust suction/vacuum cleaner device. To this end, the first air pump 211 is actuated, while the second air pump 270 remains off. The first air pump 211 will suck in air via a suction hose in the containment space possibly connected to the connection 326, the dust bag 330 in the dust bag receiving chamber 320, and the first air channel 401 of the flexible tube 400, and will blow back this air into the containment space via the first filter 241, the distribution space 230, the connection channel 250, the second air channel 402 of the flexible tube 400, the spaces 317 and 316 in the connection mouth piece 300, and eventually the openings 315 of the connection mouth piece 300, as indicated with arrows in figure 3. In this case, the dust sucked away will mainly be collected in the dust bag 330 and the air blown retour will have been filtered by the first filter 241 and will be cleaner than the air present in the containment space. In this case, the pressure within the containment space will hardly be influenced.

In a third mode, the suction device 100 operates as a combined dust suction device and low pressure machine. To this end, both the first air pump 211 and the second air pump 270 are actuated. In this case, the air flow is created as described for the second mode, in which case the dust sucked away is mainly collected in the dust bag 330 and the returned air has been filtered. Above that, a second air flow is created from the distribution space 230, through the second filter 242, towards the exit 260, as described for the first mode.

It is possible that the volume flow caused by the second air pump 270 is less than the volume flow caused by the first air pump 211. In that case, air will be returned via the second air channel 402, but less than sucked away through the first air channel 401; the pressure within the containment space lowers, in a comparable manner as if a separate low pressure machine were connected.

It is also possible that the volume flow caused by the second air pump 270 is larger than the volume flow caused by the first air pump 211. Also in that case, the suction device 100 will function well and correctly. In all cases, both filters will be flowed through in only one direction.

When the dust bag 330 is full, or needs to be exchanged for other reasons, from the containment space one places a lid on the entrance end of the dust bag 330. The dust bag 330 can easily be taken out through the free end of the connection mouthpiece 300, and is then placed in the containment space. In the same manner, a new filter is arranged in its place, and the suction device 100 is again ready for use. At no time at all has the inner space of the connection mouth piece 300, the tube 400 or the suction cabinet 200 been brought in communication with the clean room outside the containment space.

It should be clear to a person skilled in the art that the present invention is not limited to the exemplary embodiments discussed above, but that several variations and modifications are possible within the protective scope of the invention as defined in the attached claims. For instance, it is possible that the connection room 220 and the connection channel 250 are integrated to one whole, or that the distribution space 230 and the connection channel 250 are integrated to one whole, or that the connection chamber 220 is directly connected to the distribution space 230 without a separate connection channel 250, or that the connection chamber 220 and the connection channel 250 and the distribution space 230 are integrated to one whole, or that the second air channel 402 is directly connected to the distribution space 230.

Even if certain features are mentioned in different dependent claims, the present invention also relates to an embodiment that has these features in common. Even if certain features are described in combination with each other, the present invention also relates to an embodiment in which one or more of these features are omitted. Features which have not explicitly been described as being essential may also be omitted. Possible reference numerals used in a claim should not be explained as being limiting to the scope of such claim.

## Claims

1. Suction cabinet (200) for a decontamination system, comprising:
- a first entrance opening (212);
- a pump space (210) communicating with the first entrance opening (212) and having arranged therein a first motor driven air pump (211);
- a distribution space (230);
- a first filter (241) arranged between the pump space (210) and the distribution space (230), of which an entrance communicates with the pump space (210) and of which an exit communicates with the distribution space (230);
- a second entrance opening (222), communicating directly with the distribution space (230);
- a cabinet exit (260);
- a second motor driven air pump (270) arranged at the cabinet exit (260);
- a second filter (242) arranged between the distribution space (230) and the exit (260), of which an entrance communicates with the distribution space (230) and of which an exit communicates with the cabinet exit (260).

2. Suction cabinet according to claim 1, wherein the suction cabinet is capable of operating in a first mode in which the second air pump (270) is actuated while the first air pump (211) remains off, so that an air flow results through successively the second entrance opening (222), the distribution space (230), the second filter (242), towards the cabinet exit (260).

3. Suction cabinet according to claim 1 or 2, wherein the suction cabinet is capable of operating in a second mode wherein the first air pump (211) is actuated while the second air pump (270) remains off, so that an air flow results through successively the first entrance opening (212), the first filter (241), the distribution space (230), towards the second entrance opening (222).

4. Suction cabinet according to claim 1, wherein the suction cabinet is capable of operating in a third mode wherein both the first air pump (211) and the second air pump (270) are actuated, so that a first air flow results through successively the first entrance opening (212), the first filter (241), the distribution space (230), towards the second entrance opening (222), and a second air flow results through successively the first entrance opening (212), the first filter (241), the distribution space (230), the second filter (242), towards the cabinet exit (260).

5. Suction cabinet according to claim 4, wherein the second air flow has a smaller flow rate than the first air flow or has a larger flow rate than the first air flow.

6. Suction apparatus (100) for a decontamination system, comprising:
a suction cabinet (200) according to any of the previous claims;
a connection mouth piece (300) comprising:
- a tubular outer mantle (310) with a free end (311) and an wall (312) having an exit opening (313) therein;
- a dust bag receiving chamber (320) having a wall (322) with an exit opening (323) therein, arranged inside the outer mantle (310);
- an exchangeable dust bag (330) or different type of filter, designed for holding dust particles, arranged in the dust bag receiving chamber (320).

7. Suction apparatus (100) according to claim 6,
wherein the connection mouth piece (300) has a space (316, 317) between the outer mantle (310) and the dust bag receiving chamber (320);
wherein, at the free end (311), the connection mouth piece (300) has one or more passage openings (315) that communicate, via said space (316, 317), with said exit opening (313) of the outer mantle (310).

8. Suction apparatus (100) according to claim 7, wherein the one or more passage openings (315) are located adjacent, and preferably around, the entrance of the dust bag receiving chamber (320).

9. Suction apparatus (100) according to claim 6 or 7 or 8,
wherein the exit opening (323) of the dust bag receiving chamber (320), via a first air channel (401), is connected to the first entrance opening (212) of the suction cabinet (200);
wherein the exit opening (313) of the outer mantle (310), via a second air channel (402), is connected to the second entrance opening (222) of the suction cabinet (200);
wherein the second air channel (402) is separate from the first air channel (401).

10. Suction apparatus (100) according to claim 9, wherein the first air channel (401) is arranged within the second air channel (402).

11. Suction apparatus (100) according to claim 9 or 10, wherein the first air channel (401) and the second air channel (402) are part of a flexible tube (400).

12. Decontamination system having at least one containment wall (2) with at least one passage opening (3) therein, and a suction apparatus (100) according to any of the previous claims 6-11, of which the connection mouth piece (300) fits to said passage opening.
